# FASCICULE DE BREVET EUROPEEN

(11) **EP 4 091 944 B1**
(45) Date de publication et mention de la délivrance du brevet: **20.03.2024**
(21) Numéro de dépôt: 22174215.8
(22) Date de dépôt: 19.05.2022
(51) Int. Cl.: B64D 37/04, B60K 15/07

(54) **SYSTÈME DE RÉSERVOIR COMPORTANT UN CHÂSSIS, UN RÉSERVOIR DE DIHYDROGÈNE ET DES MOYENS DE FIXATION DU RÉSERVOIR AU CHÂSSIS**
TANKSYSTEM MIT EINEM GESTELL, EINEM DIHYDROGEN-TANK UND MITTELN ZUR BEFESTIGUNG DES TANKS AM GESTELL
TANK SYSTEM COMPRISING A FRAME, A DIHYDROGEN TANK AND MEANS FOR ATTACHING THE TANK TO THE FRAME

(30) Priorité: 20.05.2021 FR 2105251
(43) Date de publication de la demande: 23.11.2022
(73) Titulaire: Airbus SAS, 31700 Blagnac (FR); Airbus Operations (S.A.S.), 31060 Toulouse Cedex 9 (FR); Airbus Operations, S.L., 28906 Getafe Madrid (ES)
(72) Inventeur: ALLAIN, Julien, 31700 BLAGNAC (FR); DEFORET, Thomas, 31060 TOULOUSE (FR); LAVERNE, Julien, 31060 TOULOUSE (FR); VARDELLE, Emmanuel, 31060 TOULOUSE (FR); FUKASAKU, Kotaro, 31060 TOULOUSE (FR); FLORES HERNANDEZ, Carlos, 28906 GETAFE MADRID (ES)
(74) Mandataire: Cabinet Le Guen Maillet

(56) Documents cités:
- FR-A1- 3 001 713
- FR-A1- 3 097 202
- US-A- 3 951 362

## Description

### DOMAINE TECHNIQUE

La présente invention concerne un système de réservoir pour un aéronef où le système de réservoir comporte un châssis, un réservoir de dihydrogène et des moyens de fixation assurant la fixation du réservoir au châssis. L'invention concerne également un aéronef comportant au moins un tel système de réservoir.

### ÉTAT DE LA TECHNIQUE ANTÉRIEURE

Afin de se déplacer, un aéronef comporte un système de propulsion comportant un moteur et une hélice. Le moteur génère un mouvement rotatif qui est transmis à l'hélice.

Il est connu d'utiliser un moteur électrique afin de mettre en mouvement l'hélice, et il est également connu d'utiliser une pile à combustion afin d'alimenter le moteur électrique.

Afin d'alimenter la pile à combustible, l'aéronef embarque un réservoir de dihydrogène qui est fixé à la structure de l'aéronef. La structure est un ensemble de poutres fixées entre elles et autour desquelles sont fixés des capots constituant un carénage aérodynamique. Le réservoir est fixé à la structure, mais il est nécessaire de trouver un mode de fixation alternatif qui permet entre autres de diminuer le nombre de poutres pour un gain de poids. Le document FR 3001713 A1 divulgue un dispositif de retenue d'un réservoir dans un aéronef adapté au maintien de réservoirs d'ergols cryogéniques dans un fuselage d'aéronef.

### EXPOSÉ DE L'INVENTION

Un objet de la présente invention est de proposer un système de réservoir qui comporte un châssis, un réservoir de dihydrogène et des moyens de fixation, et qui présente un arrangement optimisé.

À cet effet, est proposé un système de réservoir pour un aéronef, ledit système de réservoir comportant :
- un réservoir comportant une enceinte intérieure constituée d'une peau intérieure fermée destinée à stocker du dihydrogène et une enceinte extérieure constituée d'une peau extérieure qui entoure l'enceinte intérieure et prenant la forme d'un cylindre de révolution autour d'un axe longitudinal X,
- un châssis comportant un cadre au niveau d'une extrémité du réservoir, et
- des moyens de fixation qui fixent la peau extérieure de l'enceinte extérieure au cadre et qui comportent trois moyens de fixation d'un premier type répartis autour de l'enceinte extérieure à 3 heures, 12 heures et 9 heures vu selon l'axe longitudinal X et une pluralité de moyens de fixation du deuxième type arrangés entre les moyens de fixation du premier type, où chaque moyen de fixation du deuxième type comporte une bielle à deux points d'articulation où l'un des points d'articulation assure la fixation au cadre et où l'autre point d'articulation assure la fixation à la peau extérieure de l'enceinte extérieure, et où les deux points de fixation d'une même bielle sont alignés parallèlement à l'axe longitudinal X.

Un tel système permet la reprise d'effort à travers la peau extérieure, limitant ainsi la complexité du châssis.

Avantageusement, le moyen de fixation du premier type à 12 heures comporte une bielle à trois points d'articulation où deux des points d'articulation assurent la fixation au cadre et où un troisième point d'articulation assure la fixation à la peau extérieure de l'enceinte extérieure.

Avantageusement, chaque point d'articulation de la bielle au cadre prend la forme d'une chape mâle de la bielle, d'une chape femelle solidaire du cadre dans laquelle s'emmanche la chape mâle et d'un arbre traversant la chape femelle et la chape mâle et l'axe de l'arbre suit une direction globalement radiale par rapport à l'axe longitudinal X.

Avantageusement, le troisième point d'articulation de la bielle à la peau extérieure de l'enceinte extérieure prend la forme d'une liaison rotule réalisée par un pion de la bielle dont l'axe est parallèle à l'axe longitudinal X et qui s'emmanche dans une rotule solidaire de la peau extérieure.

Selon un mode de réalisation particulier, les moyens de fixation du premier type à 3 heures et à 9 heures sont identiques au moyen de fixation du premier type à 12 heures.

Selon un mode de réalisation particulier, chaque moyen de fixation du premier type à 3 heures et à 9 heures comporte deux paires de bielles, chaque bielle est une bielle à deux points d'articulation où l'un des points d'articulation assure la fixation au cadre et où l'autre point d'articulation assure la fixation à la peau extérieure de l'enceinte extérieure, les deux paires de bielles d'un même moyen de fixation du premier type sont disposées de part et d'autre d'un plan médian passant par l'axe longitudinal X, les deux paires se rapprochent au niveau de leurs points d'articulation avec la peau extérieure et les deux paires s'éloignent au niveau de leurs points d'articulation avec le cadre.

Avantageusement, chaque point d'articulation de la bielle prend la forme d'une chape femelle de la bielle, d'une chape mâle solidaire respectivement du cadre et de la peau extérieure de l'enceinte extérieure sur laquelle s'emmanche la chape femelle et d'un arbre traversant la chape femelle et la chape mâle, et l'axe de l'arbre suit une direction globalement tangentielle par rapport à l'axe longitudinal X.

Avantageusement, la peau extérieure comporte des raidisseurs qui s'étendent parallèlement à l'axe longitudinal X, et chaque chape mâle solidaire de la peau extérieure de l'enceinte extérieure sur laquelle s'emmanche une chape femelle de la bielle est un des raidisseurs.

L'invention propose également un aéronef comportant au moins un système de réservoir selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue en perspective d'un aéronef comportant une pluralité de systèmes de propulsion à hélice selon l'invention,
Fig. 2 est une représentation schématique en coupe d'un système de propulsion à hélice embarquant un système de réservoir selon l'invention,
Fig. 3 est une vue en perspective d'une extrémité avant du système de réservoir selon l'invention,
Fig. 4 est un agrandissement d'une bielle à trois points selon le détail IV de la Fig. 3 et selon un premier mode de réalisation de l'invention,
Fig. 5 est une vue similaire à celle de la Fig. 4 pour un deuxième mode de réalisation de l'invention,
Fig. 6 est un agrandissement d'un tirant selon le détail VI de la Fig. 3, et
Fig. 7 est une représentation schématique d'une vue de derrière du système de réservoir selon l'invention sans le cadre arrière.

### EXPOSÉ DÉTAILLÉ DE MODES DE RÉALISATION

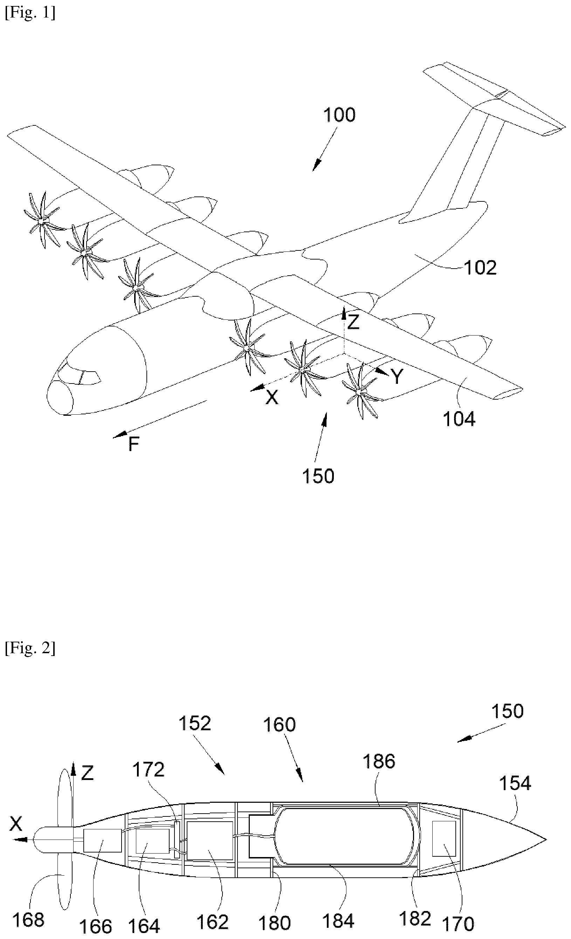

Dans la description qui suit, les termes relatifs à une position sont pris en référence à un aéronef en position d'avancement, c'est-à-dire comme il est représenté sur la Fig. 1 où la flèche F montre la direction d'avancement de l'aéronef.

La Fig. 1 montre un aéronef 100 qui présente un fuselage 102 de part et d'autre duquel est fixée une aile 104. Sous chaque aile 104 est fixé au moins un système de propulsion à hélice 150. Dans le mode de réalisation de l'invention présenté à la Fig. 1, il y a trois systèmes de propulsion 150 par aile 104.

La Fig. 2 montre le système de propulsion 150 qui comporte un châssis 152 autour duquel sont fixés des capots 154 constituant le carénage aérodynamique du système de propulsion 150.

Le châssis 152 est fixé à l'aile 104 par tous moyens d'arrimage appropriés qui ne sont pas représentés sur les Figs. mais qui sont constitués par exemple de ferrures, de bielles, d'écrous, etc.

Dans le mode de réalisation de l'invention présenté à la Fig. 2, le système de propulsion 150 comporte, fixé au châssis 152, un réservoir 160, une pile à combustible 162, un système d'apport d'air 164, un moteur électrique 166, une hélice 168, un système de refroidissement 170 et un système de gestion électrique 172.

Dans la description qui suit, et par convention, on appelle X l'axe longitudinal du réservoir 160 orienté positivement dans le sens d'avancement de l'aéronef 100, on appelle Y l'axe transversal du réservoir 160 qui est horizontal lorsque l'aéronef est au sol, et Z l'axe vertical ou hauteur verticale lorsque l'aéronef est au sol, ces trois axes X, Y et Z étant orthogonaux entre eux. L'axe de rotation de l'hélice est ici parallèle à l'axe longitudinal X.

Le système d'apport d'air 164 prélève de l'air ambiant par exemple par une écope dans un capot 154 et le filtre, pour l'envoyer vers la pile à combustible 162 à travers une canalisation d'apport d'air.

Le réservoir 160 contient du dihydrogène qui est envoyé vers la pile à combustible 162 à travers une canalisation d'apport de dihydrogène.

La pile à combustible 162 est une pile dans laquelle la génération d'une tension électrique se fait grâce à l'oxydation sur une électrode d'un combustible réducteur, ici le dihydrogène, couplée à la réduction sur l'autre électrode d'un oxydant, ici l'oxygène de l'air.

Le courant électrique généré par la pile à combustible 162 est amené jusqu' au système de gestion électrique 172 à travers des câbles électriques. Le système de gestion électrique 172 comporte par exemple un contrôleur avec un convertisseur électrique qui convertit un courant électrique continu délivré par la pile à combustible 162 vers un courant électrique continu ou alternatif délivré au moteur électrique 166. La conversion vers le courant électrique continu ou alternatif dépend du type de moteur électrique utilisé.

En sortie du système de gestion électrique 172, le courant électrique est amené à travers des câbles électriques jusqu'au moteur électrique 166 et l'hélice 168 est fixée sur l'arbre de sortie du moteur électrique 166 éventuellement à travers une boîte de vitesse.

Le système de refroidissement 170 assure la gestion thermique des éléments dans le système de propulsion 150.

La présente invention est plus particulièrement focalisée sur la fixation du réservoir 160 sur le châssis 152.

Le châssis 152 comporte une pluralité de cadres répartis le long de l'axe longitudinal X et de poutrelles reliant entre eux les cadres afin de former un squelette sur lequel se fixent les capots 154 et les différents éléments du système de propulsion 150.

Le châssis 152 comporte entre autres un cadre avant 180 et un cadre arrière 182, où le cadre avant 180 est au niveau de l'extrémité avant du réservoir 160 et où le cadre arrière 182 est au niveau de l'extrémité arrière du réservoir 160. Le cadre avant 180 et le cadre arrière 182 prennent ici chacun la forme d'une couronne disposée autour de l'extrémité correspondante du réservoir 160. Même si chaque couronne est ici circulaire, elle peut prendre une forme différente.

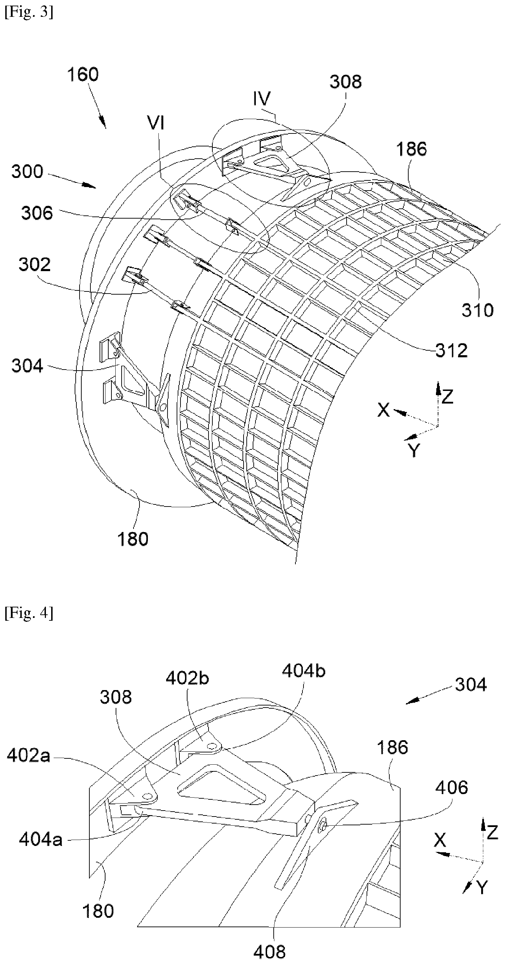

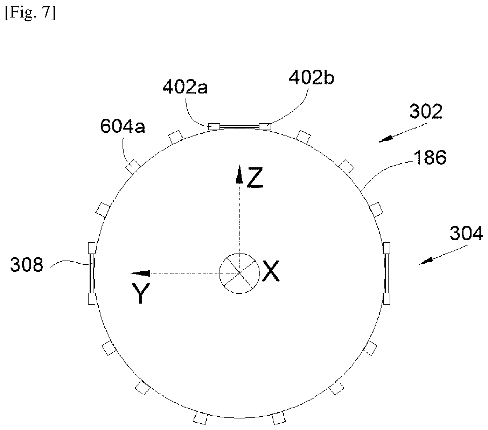

Les Figs. 3 à 7 montrent le cadre avant 180 et le réservoir 160 avec des moyens de fixation 300 qui fixent le réservoir 160 au cadre avant 180, mais une installation identique peut être effectuée entre le réservoir 160 et le cadre arrière 182, et d'une manière générale, une telle installation peut s'effectuer entre le réservoir 160 et l'un et/ou l'autre des cadres 180, 182.

Le réservoir 160 comporte une enceinte intérieure 184 qui est constituée d'une peau intérieure fermée et dans laquelle est stocké le dihydrogène, et une enceinte extérieure 186 qui est constituée d'une peau extérieure qui entoure l'enceinte intérieure 184.

Dans le mode de réalisation présenté ici, l'enceinte intérieure 184 prend la forme d'un cylindre de révolution fermé à ses extrémités et dont l'axe est l'axe longitudinal X.

De la même manière, l'enceinte extérieure 186 prend la forme d'un cylindre de révolution dont l'axe est l'axe longitudinal X et qui est également fermé à ses extrémités pour assurer une meilleure rigidité.

L'enceinte intérieure 184 est maintenue à l'intérieur de l'enceinte extérieure 186 par tous moyens appropriés comme par exemple des entretoises fixées entre la peau intérieure et la peau extérieure.

L'enceinte extérieure 186 est un élément structurel, c'est-à-dire qu'il est dimensionné pour transmettre des efforts relativement importants sans se déformer, tandis que l'enceinte intérieure 184 a uniquement un rôle de contenant pour le dihydrogène.

Pour renforcer la structure de l'enceinte extérieure 186, la peau extérieure comporte des raidisseurs 310 et 312, et en particulier des premiers raidisseurs 310 qui s'étendent parallèlement à l'axe longitudinal X et des deuxièmes raidisseurs 312 qui prennent la forme de couronnes autour de la peau extérieure.

Les moyens de fixation 300 sont fixés entre le cadre avant 180 et la peau extérieure de l'enceinte extérieure 186 et comme précisé ci-dessus, les moyens de fixation 300 peuvent être fixés entre le cadre arrière 182 et la peau extérieure de l'enceinte extérieure 186, et d'une manière générale, les moyens de fixation 300 fixent la peau extérieure de l'enceinte extérieure 186 à l'un et/ou l'autre des cadres 180, 182.

Ainsi, les efforts extérieurs qui s'appliquent sur le système de propulsion 150 se transmettent au châssis 152, et en particulier à un des cadres avant 180 ou arrière 182, puis, à travers les moyens de fixation 300 et l'enceinte extérieure 186, à l'autre parmi le cadre arrière 182 ou avant 180, et enfin à l'aile 104 à travers les moyens d'arrimage.

Un système de réservoir selon l'invention comporte ainsi le réservoir 160, le châssis 152 avec un cadre 180, 182 et les moyens de fixation 300 qui fixent la peau extérieure de l'enceinte extérieure 186 au cadre 180, 182.

Une telle installation ne nécessite donc pas de poutrelles le long de la peau extérieure, c'est-à-dire ici entre le cadre avant 180 et le cadre arrière 182, d'où un gain de place et de poids.

La description des moyens de fixation 300 est faite en rapport avec le cadre avant 180 mais elle peut s'appliquer de la même manière au cadre arrière 182.

Les moyens de fixation 300 comprennent un ensemble de moyens de fixation d'un premier type 304 et un ensemble de moyens de fixation d'un deuxième type 302.

Dans le mode de réalisation de la Fig. 3 et de la Fig. 4, chaque moyen de fixation du premier type 304 comporte une bielle 308 à trois points d'articulation où deux des points d'articulation assurent la fixation au cadre avant 180 et où un troisième point d'articulation assure la fixation à la peau extérieure de l'enceinte extérieure 186.

Comme le montre la Fig. 4, chaque point d'articulation de la bielle 308 au cadre avant 180 prend la forme d'une chape mâle 404a-b de la bielle 308, d'une chape femelle 402a-b solidaire du cadre avant 180 dans laquelle s'emmanche la chape mâle 404a-b et d'un arbre traversant la chape femelle 402a-b et la chape mâle 404a-b. L'axe de l'arbre suit une direction globalement radiale par rapport à l'axe longitudinal X. Préférentiellement la liaison entre la chape femelle 402a-b et la chape mâle 404a-b associée prend la forme d'une liaison rotule.

Dans le mode de réalisation de l'invention présenté ici, chaque chape femelle 402a-b solidaire du cadre avant 180 prend la forme d'une ferrure fixée au cadre avant 180 par exemple par soudure.

Comme le montre la Fig. 4, le troisième point d'articulation de la bielle 308 à la peau extérieure de l'enceinte extérieure 186 prend la forme d'une liaison rotule réalisée ici par un pion 406 (également appelé « Spigot ») de la bielle 308 dont l'axe est parallèle à l'axe longitudinal X et qui s'emmanche dans une rotule solidaire de la peau extérieure, ici la rotule est insérée dans une membrane 408 de la peau extérieure, et qui s'étend radialement par rapport à l'axe longitudinal X.

Il y a trois moyens de fixation du premier type 304 qui sont répartis autour de l'enceinte extérieure 186 à 3 heures, 12 heures et 9 heures vu selon l'axe longitudinal X.

Les deux moyens de fixation du premier type 304 à 3 et 9 heures permettent une reprise des efforts selon l'axe vertical Z, et le moyen de fixation du premier type 304 à 12 heures permet une reprise des efforts selon l'axe transversal Y.

Dans le mode de réalisation de l'invention de la Fig. 3, les moyens de fixation du premier type 304 à 3 heures et à 9 heures sont identiques au moyen de fixation du premier type 304 à 12 heures.

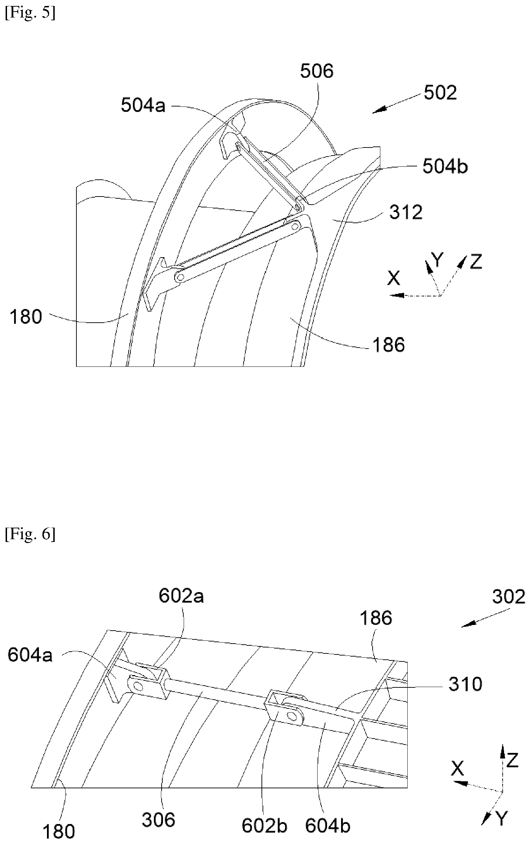

Le moyen de fixation 502 de la Fig. 5 est une variante pour un moyen de fixation du premier type pour la reprise des efforts selon l'axe vertical Z, c'est-à-dire pour les moyens de fixation du premier type disposés à 3 et 9 heures.

Le moyen de fixation du premier type 502 comporte deux paires de bielles 506, où chaque bielle 506 est une bielle à deux points d'articulation où l'un des points d'articulation assure la fixation au cadre avant 180 et où l'autre point d'articulation assure la fixation à la peau extérieure de l'enceinte extérieure 186.

Les deux paires de bielles 506 d'un même moyen de fixation du premier type 502 sont disposées de part et d'autre d'un plan médian passant par l'axe longitudinal X où les deux paires se rapprochent au niveau de leurs points d'articulation avec la peau extérieure et où les deux paires s'éloignent au niveau de leurs points d'articulation avec le cadre avant 180. L'angle d'inclinaison de chaque bielle 506 par rapport au plan médian est par exemple de l'ordre de 45°.

Comme le montre la Fig. 5, les deux bielles 506 d'un même moyen de fixation du premier type 502 forment, à leurs deux extrémités, une chape femelle dans laquelle s'emmanche une chape mâle 504a-b respectivement solidaire du cadre avant 180 et de la peau extérieure et dont l'axe est perpendiculaire à la direction des bielles 506.

Dans le mode de réalisation de l'invention présenté ici, chaque chape mâle 504a solidaire du cadre avant 180 prend la forme d'une ferrure fixée au cadre avant 180 par exemple par soudure.

Dans le mode de réalisation de l'invention présenté ici, chaque chape mâle 504b solidaire de la peau extérieure prend la forme d'une extension des deuxièmes raidisseurs 312.

Chaque moyen de fixation du deuxième type 302 comporte une bielle 306 à deux points d'articulation où l'un des points d'articulation assure la fixation au cadre avant 180 et où l'autre point d'articulation assure la fixation à la peau extérieure de l'enceinte extérieure 186. Les deux points de fixation d'une même bielle 306 sont alignés parallèlement à l'axe longitudinal X ce qui permet une reprise des efforts selon ledit axe longitudinal X.

Comme le montre la Fig. 6, chaque point d'articulation de la bielle 306 prend ici la forme d'une chape femelle 602a-b de la bielle 306, d'une chape mâle 604a-b solidaire respectivement du cadre avant 180 et de la peau extérieure de l'enceinte extérieure 186 sur laquelle s'emmanche la chape femelle 602a-b et d'un arbre traversant la chape femelle 602a-b et la chape mâle 604a-b. L'axe de l'arbre suit une direction globalement tangentielle par rapport à l'axe longitudinal X. Préférentiellement la liaison entre la chape femelle 602a-b et la chape mâle 604a-b associée prend la forme d'une liaison rotule.

Pour permettre une adaptation de la longueur de chaque bielle 306 en fonction de la position du cadre avant 180 et de l'enceinte extérieure 186, chaque bielle 306 est une bielle réglable en longueur.

Dans le mode de réalisation de l'invention présenté ici, chaque chape mâle 604a solidaire du cadre avant 180 prend la forme d'une ferrure fixée au cadre avant 180 par exemple par soudure.

Dans le mode de réalisation de l'invention présenté ici, chaque chape mâle 604b solidaire de la peau extérieure de l'enceinte extérieure 186 sur laquelle s'emmanche une chape femelle 602a-b de la bielle 306 est un des premiers raidisseurs 310.

Dans le mode de réalisation de l'invention présenté ici, il y a douze moyens de fixation du deuxième type 302, c'est-à-dire douze bielles 306, qui sont répartis autour de l'axe longitudinal X, mais bien sûr un nombre différent est envisageable selon les dimensions du réservoir 160. Les moyens de fixation du deuxième type 302 sont arrangés entre les moyens de fixation du premier type 304, 502.

Dans la description ci-dessus, le système de propulsion 150 forme un ensemble qui se fixe sous une aile 104 et le châssis 152 est le châssis du système de propulsion 150, mais d'autres arrangements sont possibles. Par exemple, il est possible d'intégrer directement le système de propulsion 150 dans l'aile 104 et le châssis 152 devient une partie du châssis de l'aile 104.

## Revendications

1. Système de réservoir pour un aéronef (100), ledit système de réservoir comportant :
- un réservoir (160) comportant une enceinte intérieure (184) constituée d'une peau intérieure fermée destinée à stocker du dihydrogène et une enceinte extérieure (186) constituée d'une peau extérieure qui entoure l'enceinte intérieure (184) et prenant la forme d'un cylindre de révolution autour d'un axe longitudinal X,
- un châssis (152) comportant un cadre (180, 182) au niveau d'une extrémité du réservoir (160), et
- des moyens de fixation (300) qui fixent la peau extérieure de l'enceinte extérieure (186) au cadre (180, 182) et qui comportent trois moyens de fixation d'un premier type (304) répartis autour de l'enceinte extérieure (186) à 3 heures, 12 heures et 9 heures vu selon l'axe longitudinal X, et une pluralité de moyens de fixation du deuxième type (302), **caractérisé en ce que** les moyens du deuxième type (302) sont arrangés entre les moyens de fixation du premier type (304, 502), **en ce que** chaque moyen de fixation du deuxième type (302) comporte une bielle (306) à deux points d'articulation où l'un des points d'articulation assure la fixation au cadre (180, 182) et où l'autre point d'articulation assure la fixation à la peau extérieure de l'enceinte extérieure (186), et **en ce que** les deux points de fixation d'une même bielle (306) sont alignés parallèlement à l'axe longitudinal X.

2. Système de réservoir selon la revendication 1, **caractérisé en ce que** le moyen de fixation du premier type (304) à 12 heures comporte une bielle (308) à trois points d'articulation où deux des points d'articulation assurent la fixation au cadre (180, 182) et où un troisième point d'articulation assure la fixation à la peau extérieure de l'enceinte extérieure (186).

3. Système de réservoir selon la revendication 2, **caractérisé en ce que** chaque point d'articulation de la bielle (308) au cadre (180, 182) prend la forme d'une chape mâle (404a-b) de la bielle (308), d'une chape femelle (402a-b) solidaire du cadre (180, 182) dans laquelle s'emmanche la chape mâle (404a-b) et d'un arbre traversant la chape femelle (402a-b) et la chape mâle (404a-b) et **en ce que** l'axe de l'arbre suit une direction globalement radiale par rapport à l'axe longitudinal X.

4. Système de réservoir selon la revendication 3, **caractérisé en ce que** le troisième point d'articulation de la bielle (308) à la peau extérieure de l'enceinte extérieure (186) prend la forme d'une liaison rotule réalisée par un pion (406) de la bielle (308) dont l'axe est parallèle à l'axe longitudinal X et qui s'emmanche dans une rotule solidaire de la peau extérieure.

5. Système de réservoir selon l'une des revendications 2 à 4, **caractérisé en ce que** les moyens de fixation du premier type (304) à 3 heures et à 9 heures sont identiques au moyen de fixation du premier type (304) à 12 heures.

6. Système de réservoir selon l'une des revendications 2 à 4, **caractérisé en ce que** chaque moyen de fixation du premier type (502) à 3 heures et à 9 heures comporte deux paires de bielles (506), **en ce que** chaque bielle (506) est une bielle à deux points d'articulation où l'un des points d'articulation assure la fixation au cadre (180, 182) et où l'autre point d'articulation assure la fixation à la peau extérieure de l'enceinte extérieure (186), **en ce que** les deux paires de bielles (506) d'un même moyen de fixation du premier type (502) sont disposées de part et d'autre d'un plan médian passant par l'axe longitudinal X, **en ce que** les deux paires se rapprochent au niveau de leurs points d'articulation avec la peau extérieure et **en ce que** les deux paires s'éloignent au niveau de leurs points d'articulation avec le cadre (180, 182).

7. Système de réservoir selon l'une des revendications 1 à 6, **caractérisé en ce que** chaque point d'articulation de la bielle (306) prend la forme d'une chape femelle (602a-b) de la bielle (306), d'une chape mâle (604a-b) solidaire respectivement du cadre (180, 182) et de la peau extérieure de l'enceinte extérieure (186) sur laquelle s'emmanche la chape femelle (602a-b) et d'un arbre traversant la chape femelle (602a-b) et la chape mâle (604a-b), et **en ce que** l'axe de l'arbre suit une direction globalement tangentielle par rapport à l'axe longitudinal X.

8. Système de réservoir selon la revendication 7, **caractérisé en ce que** la peau extérieure comporte des raidisseurs (310) qui s'étendent parallèlement à l'axe longitudinal X, et **en ce que** chaque chape mâle (604b) solidaire de la peau extérieure de l'enceinte extérieure (186) sur laquelle s'emmanche une chape femelle (602a-b) de la bielle (306) est un des raidisseurs (310).

9. Aéronef (100) comportant au moins un système de réservoir selon l'une des revendications précédentes.

## Patentansprüche

1. Tanksystem für ein Luftfahrzeug (100), wobei das Tanksystem umfasst:
- einen Tank (160), der eine aus einer geschlossenen Innenhaut bestehende innere Umschließung (184), die dazu bestimmt ist, Diwasserstoff zu speichern, und eine aus einer Außenhaut bestehende äußere Umschließung (186), welche die innere Umschließung (184) umgibt und die Form eines Rotationszylinders um eine Längsachse X aufweist, umfasst,
- ein Gestell (152), das einen Rahmen (180, 182) an einem Ende des Tanks (160) umfasst, und
- Befestigungsmittel (300), welche die Außenhaut der äußeren Umschließung (186) am Rahmen (180, 182) befestigen und welche drei Befestigungsmittel eines ersten Typs (304), die, entlang der Längsachse X gesehen, in einer 3-Uhr-, einer 12-Uhr- und einer 9-Uhr-Position um die äußere Umschließung (186) herum verteilt sind, und mehrere Befestigungsmittel des zweiten Typs (302) umfassen, **dadurch gekennzeichnet, dass** die Mittel des zweiten Typs (302) zwischen den Befestigungsmitteln des ersten Typs (304, 502) angeordnet sind, dadurch, dass jedes Befestigungsmittel des zweiten Typs (302) eine Stange (306) mit zwei Anlenkpunkten umfasst, wobei einer der Anlenkpunkte die Befestigung am Rahmen (180, 182) sicherstellt und wobei der andere Anlenkpunkt die Befestigung an der Außenhaut der äußeren Umschließung (186) sicherstellt, und dadurch, dass die zwei Befestigungspunkte ein und derselben Stange (306) parallel zur Längsachse X ausgerichtet sind.

2. Tanksystem nach Anspruch 1, **dadurch gekennzeichnet, dass** das Befestigungsmittel des ersten Typs (304) in der 12-Uhr-Position eine Stange (308) mit drei Anlenkpunkten umfasst, wobei zwei der Anlenkpunkte die Befestigung am Rahmen (180, 182) sicherstellen und wobei ein dritter Anlenkpunkt die Befestigung an der Außenhaut der äußeren Umschließung (186) sicherstellt.

3. Tanksystem nach Anspruch 2, **dadurch gekennzeichnet, dass** jeder Anlenkpunkt der Stange (308) am Rahmen (180, 182) die Form eines Gabelstück-Steckteils (404a-b) der Stange (308), eines mit dem Rahmen (180, 182) fest verbundenen Gabelstück-Aufnahmeteils (402a-b), in welches das Gabelstück-Steckteil (404a-b) eingeschoben wird, und einer das Gabelstück-Aufnahmeteil (402a-b) und das Gabelstück-Steckteil (404a-b) durchquerenden Welle aufweist, und dadurch, dass die Achse der Welle in einer Richtung verläuft, die im Wesentlichen radial bezüglich der Längsachse X ist.

4. Tanksystem nach Anspruch 3, **dadurch gekennzeichnet, dass** der dritte Anlenkpunkt der Stange (308) an der Außenhaut der äußeren Umschließung (186) die Form einer Kugelgelenkverbindung aufweist, die aus einem Bolzen (406) der Stange (308) besteht, dessen Achse parallel zur Längsachse X ist und der in ein mit der Außenhaut fest verbundenes Kugelgelenk eingeschoben wird.

5. Tanksystem nach einem der Ansprüche 2 bis 4, **dadurch gekennzeichnet, dass** die Befestigungsmittel des ersten Typs (304) in der 3-Uhr- und in der 9-Uhr-Position identisch mit dem Befestigungsmittel des ersten Typs (304) in der 12-Uhr-Position sind.

6. Tanksystem nach einem der Ansprüche 2 bis 4, **dadurch gekennzeichnet, dass** jedes Befestigungsmittel des ersten Typs (502) in der 3-Uhr- und in der 9-Uhr-Position zwei Paare von Stangen (506) umfasst, dadurch, dass jede Stange (506) eine Stange mit zwei Anlenkpunkten ist, wobei einer der Anlenkpunkte die Befestigung am Rahmen (180, 182) sicherstellt und wobei der andere Anlenkpunkt die Befestigung an der Außenhaut der äußeren Umschließung (186) sicherstellt, dadurch, dass die zwei Paare von Stangen (506) ein und desselben Befestigungsmittels des ersten Typs (502) beiderseits einer durch die Längsachse X verlaufenden Mittelebene angeordnet sind, dadurch, dass die zwei Paare sich an ihren Anlenkpunkten an der Außenhaut einander nähern, und dadurch, dass die zwei Paare sich an ihren Anlenkpunkten am Rahmen (180, 182) voneinander entfernen.

7. Tanksystem nach einem der Ansprüche 1 bis 6, **dadurch gekennzeichnet, dass** jeder Anlenkpunkt der Stange (306) die Form eines Gabelstück-Aufnahmeteils (602a-b) der Stange (306), eines mit dem Rahmen (180, 182) bzw. mit der Außenhaut der äußeren Umschließung (186) fest verbundenen Gabelstück-Steckteils (604a-b), auf welches das Gabelstück-Aufnahmeteil (602a-b) aufgeschoben wird, und einer das Gabelstück-Aufnahmeteil (602a-b) und das Gabelstück-Steckteil (604a-b) durchquerenden Welle aufweist, und dadurch, dass die Achse der Welle in einer Richtung verläuft, die im Wesentlichen tangential bezüglich der Längsachse X ist.

8. Tanksystem nach Anspruch 7, **dadurch gekennzeichnet, dass** die Außenhaut Versteifungsrippen (310) umfasst, die sich parallel zur Längsachse X erstrecken, und dadurch, dass jedes mit der Außenhaut der äußeren Umschließung (186) fest verbundene Gabelstück-Steckteil (604b), auf das ein Gabelstück-Aufnahmeteil (602a-b) der Stange (306) aufgeschoben wird, eine der Versteifungsrippen (310) ist.

9. Luftfahrzeug (100), welches mindestens ein Tanksystem nach einem der vorhergehenden Ansprüche umfasst.

## Claims

1. Tank system for an aircraft (100), the tank system comprising:
- a tank (160) comprising an inner enclosure (184) consisting of a closed inner skin intended for storing dihydrogen and an outer enclosure (186) consisting of an outer skin that surrounds the inner enclosure (184) and taking the form of a cylinder of revolution about a longitudinal axis X,
- a chassis (152) comprising a frame (180, 182) at one end of the tank (160), and
- attachment means (300) which attach the outer skin of the outer enclosure (186) to the frame (180, 182) and which comprise three attachment means of a first type (304) distributed about the outer enclosure (186) at 3 o'clock, 12 o'clock and 9 o'clock as viewed along the longitudinal axis X and a plurality of attachment means of the second type (302),
**characterized in that** the means of the second type (302) are arranged between the attachment means of the first type (304, 502), **in that** each attachment means of the second type (302) comprises a two-link-point connecting rod (306), one of the link points providing attachment to the frame (180, 182) and the other link point providing attachment to the outer skin of the outer enclosure (186), and **in that** the two link points of a given connecting rod (306) are aligned parallel to the longitudinal axis X.

2. Tank system according to Claim 1, **characterized in that** the attachment means of the first type (304) at 12 o'clock comprises a three-link-point connecting rod (308), two of these link points attaching to the frame (180, 182) and a third link point attaching to the outer skin of the outer enclosure (186).

3. Tank system according to Claim 2, **characterized in that** each link point between the connecting rod (308) and the frame (180, 182) takes the form of a male clevis (404a-b) of the connecting rod (308), a female clevis (402a-b) which is secured to the frame (180, 182) and into which the male clevis (404a-b) fits, and a pin passing through the female clevis (402a-b) and the male clevis (404a-b), and **in that** the axis of the pin is aligned in a direction that is generally radial with respect to the longitudinal axis X.

4. Tank system according to Claim 3, **characterized in that** the third link point between the connecting rod (308) and the outer skin of the outer enclosure (186) takes the form of a ball link point embodied by a peg (406) of the connecting rod (308), whose axis is parallel to the longitudinal axis X and which fits into a ball that is secured to the outer skin.

5. Tank system according to Claims 2 to 4, **characterized in that** the attachment means of the first type (304) at 3 o'clock and at 9 o'clock are identical to the attachment means of the first type (304) at 12 o'clock.

6. Tank system according to one of Claims 2 to 4, **characterized in that** each attachment means of the first type (502) at 3 o'clock and at 9 o'clock comprises two pairs of connecting rods (506), **in that** each connecting rod (506) is a two-link-point connecting rod, one of the link points providing attachment to the frame (180, 182) and the other link point providing attachment to the outer skin of the outer enclosure (186), **in that** the two pairs of connecting rods (506) of a given attachment means of the first type (502) are arranged on either side of a median plane passing through the longitudinal axis X, **in that** the two pairs come closer together at their link points with the outer skin, and **in that** the two pairs are further apart at their link points with the frame (180, 182).

7. Tank system according to one of Claims 1 to 6, **characterized in that** each link point of the connecting rod (306) takes the form of a female clevis (602a-b) of the connecting rod (306), a male clevis (604a-b) which is secured respectively to the frame (180, 182) and to the outer skin of the outer enclosure (186) onto which the female clevis (602a-b) fits, and a pin passing through the female clevis (602a-b) and the male clevis (604a-b), and **in that** the axis of the pin is aligned in a direction that is generally tangential with respect to the longitudinal axis X.

8. Tank system according to claim 7, **characterized in that** the outer skin comprises stiffeners (310) that extend parallel to the longitudinal axis X, and **in that** each male clevis (604b) which is secured to the outer skin of the outer enclosure (186), and onto which a female clevis (602a-b) of the connecting rod (306) fits, is one of the stiffeners (310).

9. Aircraft (100) having at least one tank system according to one of the preceding claims.
